# EUROPEAN PATENT SPECIFICATION

(11) **EP 0 479 853 B1**
(45) Date of publication and mention of the grant of the patent: **18.08.1993**
(21) Application number: 90909881.6
(22) Date of filing: 05.06.1990
(51) Int. Cl.: F16K 1/22, F16K 31/163, F16K 27/02

(54) **BUTTERFLY VALVES WITH ACTUATORS CARRIED ON VALVE PLATE**
DREHKLAPPENVENTILE MIT EINER STEUERUNGSVORRICHTUNG AUF DER VENTILKLAPPE
ROBINET PAPILLON AVEC ACTUATEUR PORTE PAR LA PLAQUE

(30) Priority: 30.06.1989 US 374897
(43) Date of publication of application: 15.04.1992
(73) Proprietor: AlliedSignal Inc., Morristown, New Jersey 07962-2245 (US)
(72) Inventor: BALL, Larry, K., Chandler, AZ 85226 (US); HINES, Marshall, U., Scottsdale, AZ 85254 (US)
(74) Representative: Brock, Peter William
(86) International application number: US9003183
(87) International publication number: WO9100452

(56) References cited:
- EP-A- 0 320 491
- US-A- 2 796 082
- US-A- 3 794 288

## Description

### TECHNICAL FIELD

The present invention relates generally to butterfly valves. More specifically, the invention relates to such valves that incorporate novel means for moving or retaining the position of a butterfly plate subjected to aerodynamic or hydrodynamic forces which tend to resist such movement or retention.

### BACKGROUND OF THE INVENTION

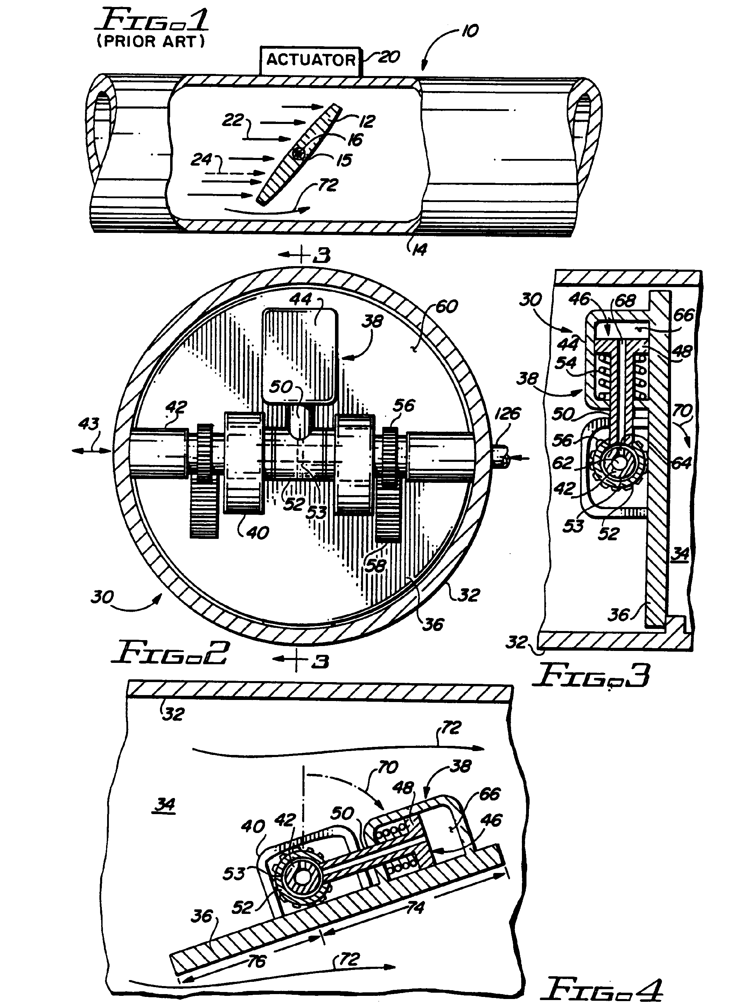

FIG. 1 of the accompanying drawings schematically illustrates a conventional butterfly valve arrangement 10 in which a butterfly plate 12 positioned in a duct 14 is rotated about an axis 15 defined by a spindle or shaft 16 in order to vary the rate at which fluid (indicated by the arrow 72) flows through the duct. Typically, the plate 12 is rotated via torque applied by an external actuator 20 through the shaft 16.

A series of arrows 22 generally illustrates the static pressure profile resulting from the hydrodynamic forces acting on the butterfly plate 12. The overall effect of the static pressure may be represented by a center of pressure (indicated by the dashed arrow 24) which tends to force the plate 12 to the closed position. This force must be countered or overcome by energy supplied to the actuator 20 in order to retain the position of the plate 12 or further open the valve 10.

As a general matter, in order to lower the energy required to match or exceed the hydrodynamic forces acting on the plate 12, the center of pressure 24 should be favorably altered in relation to the axis 15 of rotation. That is, either the center of pressure 24 should be aligned with or moved closer to the shaft 16, or the shaft should be aligned with or moved closer to the center of pressure.

Prior approaches to designing butterfly valves appear to have embodied the various assumptions described below, each of which is rejected for particular embodiments of the present invention, and all of which are rejected for preferred embodiments thereof.

A first of these assumptions, applicable to butterfly valves with internally-disposed actuators, is that the actuator 20 should be secured to the duct 14 with its output arm secured to the plate 12, thereby operating in a push-pull mode to control the position of the plate (see, e.g., U.S. Patent No. 3,794,288 which shows a butterfly valve according to the first part of claim 1). Positioning the actuator in that manner limits practicable design options and can result in unnecessarily high flow obstruction by the actuator. Accordingly, the present invention rejects this first assumption for all embodiments thereof, and these differ from the valve disclosed in the forementioned patent in that the actuator is secured to the plate so that it is carried with the plate when the latter moves.

A second of the assumptions is that the hydrodynamic forces acting on the plate 12 must be overcome through brute force applied by torquing the shaft 16, or by pushing on the plate. A partial exception thereto is the invention disclosed in U.S. Patent No. 3,971,414 Illing. Illing provides a butterfly valve in which a servo-tab portion of the plate 12 is angled relative to the remainder as needed to compensate for excessive hydrodynamic forces otherwise acting on the plate at various rotational positions. The servo-tab portion is angled in response to torque which is applied to the shaft 16 and transferred to the servo-tab via a combination of mechanical linkage elements secured to the shaft and the plate 12. The present invention rejects this assumption and differs substantially from the Illing invention for reasons which will become evident from the following text.

A third of the assumptions is that the relative motion between the plate 12 and the shaft or spindle 16 is one of simple rotation. This assumption is understandable in view of the fact that in order to close the valve 10, the diameter of the plate 12 must be substantially the same as the inside diameter of the duct 14 unless a stepped duct is provided. However, acceptance of this assumption eliminates from consideration a number of advantageous design options. As is further explained by the following description, which includes the appended claims and accompanying drawings, the present invention rejects this assumption for preferred embodiments thereof. In these embodiments, the plate is secured to the pivot shaft in such manner that it is both revolvable and translatable relative to the shaft. This arrangement provides the ability to achieve closer alignment of the center of pressure 24 with the shaft when the valve is open, thus reducing the externally-supplied energy required to maintain a given flow rate, and further provides for far more use of hydrodynamic force in adjusting flow rates. This in turn, should provide the ability to use smaller actuators, thereby lowering the overall weight of the butterfly valve structure.

### DISCLOSURE OF THE INVENTION

The salient feature of the invention is the securement of an actuator to the plate member of the butterfly valve such that the actuator is carried by the plate member at all times.

The invention discloses a number of additional structural features which illustrate the importance of the above-recited feature. Each of these, however, has its own unique advantage.

One such feature is a pilot valve carried by the plate member. The pilot valve is opened by the actuator to effect opening of the butterfly valve, and can be used to variably open the latter. This feature provides the ability to change the area over which hydrodynamic forces act on the plate member, which in turn varies the location of the center of pressure associated with those forces.

Another feature is the securement of the plate member to the shaft such that the former is revolvable and translatable relative to the latter. This feature is considered to be of paramount importance, and provides the ability to achieve substantial reduction in the externally-supplied energy which is required to regulate butterfly valves. The actuator can be used in a variety of ways to translate the plate member relative to the shaft so that the center of pressure can be positioned to minimize hydrodynamic torque exerted on the plate member (where it is desired to maintain a given flow rate), or to revolve the plate member relative to the shaft (where it is desired to change the flow rate).

A third feature, applicable to those embodiments which incorporate the immediately forementioned feature, is mechanical timing of the plate member relative to the shaft. This feature provides slip-free movement between the shaft and the plate member in order to avoid calibration drifts. In addition, it facilitates a rolling motion of the plate member around a fixed shaft in particular embodiments of the invention.

Other features will be evident from the following description.

### BRIEF DESCRIPTION OF THE DRAWINGS

FIG. 1 is a generally cross-sectional and partially schematic illustration of a conventional butterfly valve arrangement.

FIG. 2 is a generally elevational, and partially cross-sectional view of a butterfly valve according to a first embodiment of the invention.

FIG. 3 is a cross-sectional view taken along line 3-3 of FIG. 2.

FIG. 4 is a cross-sectional view as in FIG. 3, showing the butterfly valve in an open position.

FIGS. 5, 6, and 7, are views substantially corresponding in kind to those of FIGS. 2, 3, and 4, and illustrate a second embodiment of the invention.

FIGS. 8, 9, and 10, are views substantially corresponding in kind to FIGS. 2, 3, and 4, and illustrate a third embodiment of the invention. In FIG. 9, portions of certain components are omitted for clarity.

FIG. 11 is a partial cross-sectional view taken along line 11-11 of FIG. 8.

FIGS. 12 and 13 are generally schematic and partially cross-sectional views illustrating additional embodiments of the invention.

### BEST MODE FOR CARRYING OUT THE INVENTION

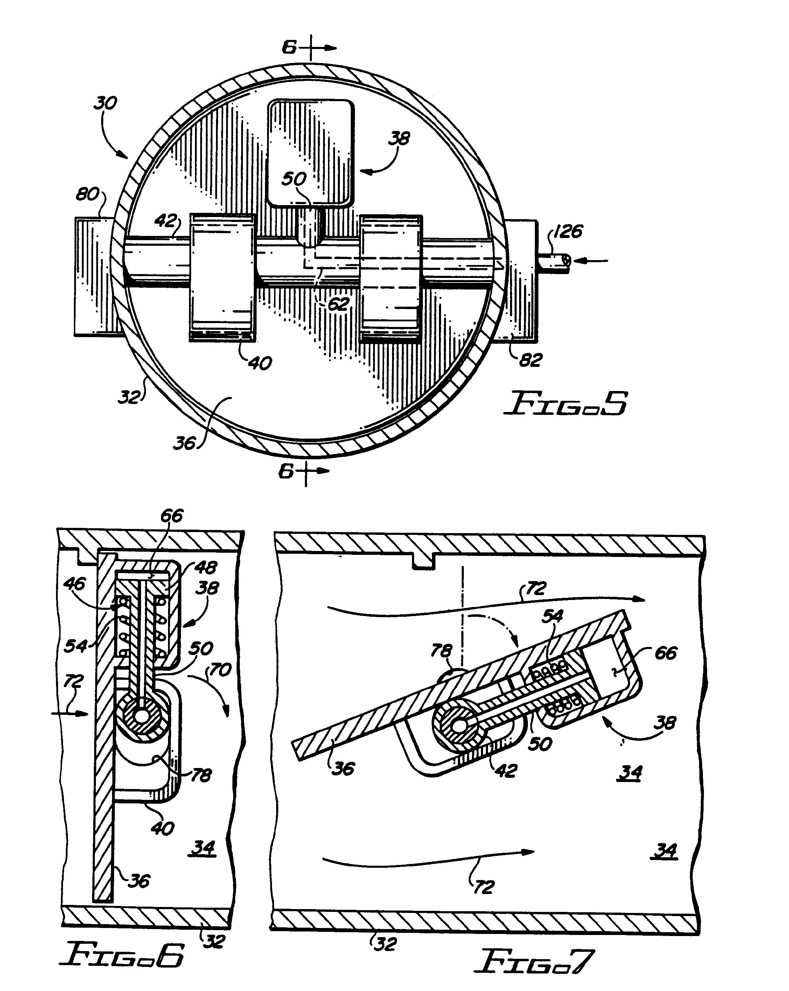

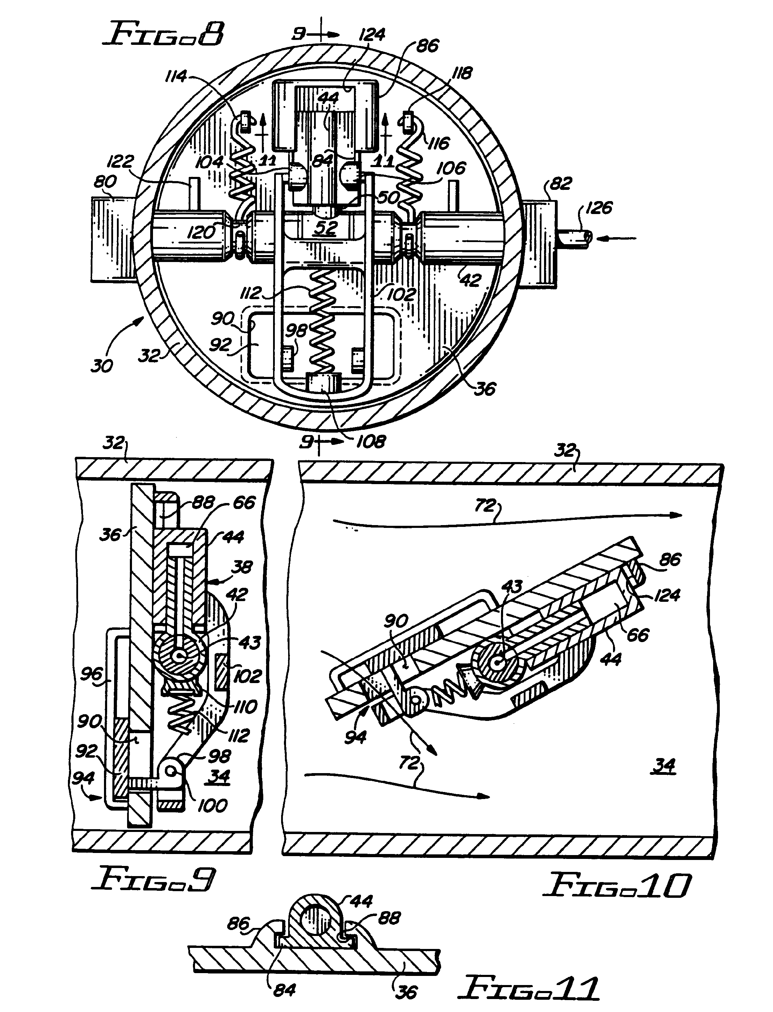

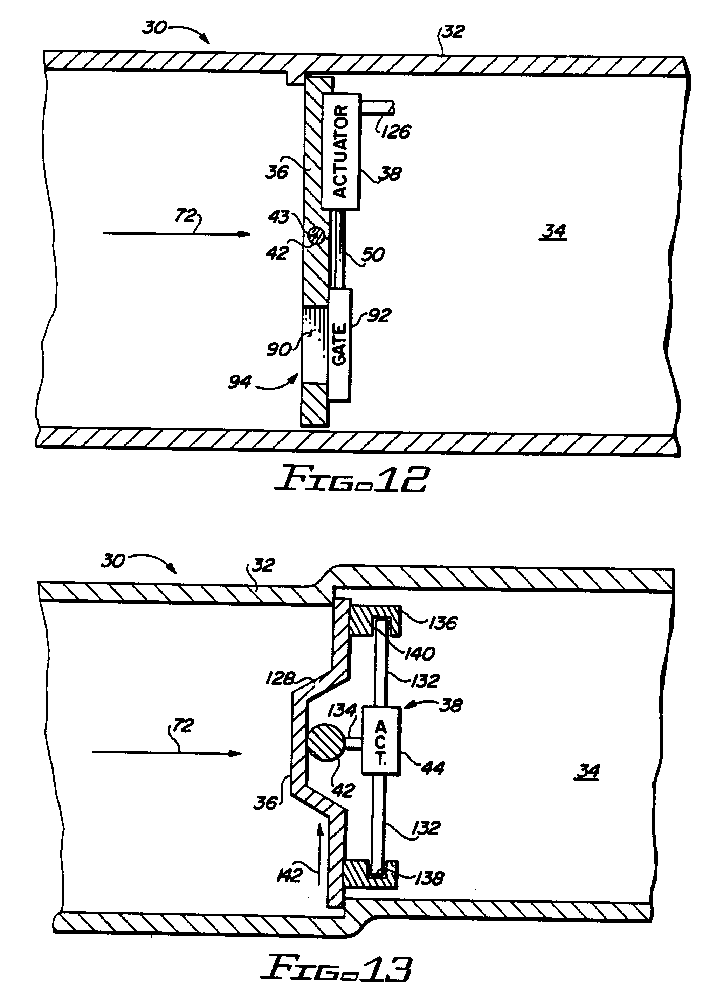

FIGS. 2 and 3 illustrate a butterfly valve 30 comprising a duct 32 defining an elongate flow path 34 for fluid, a plate-like valve member 36 (hereinafter "plate") rotatable between a closed position spanning the flow path and a fully open position (see FIG. 4) associated with maximum fluid communication along the path, and a pneumatically-driven, piston-type actuator 38 mounted on the plate. Two generally C-shaped brackets 40 are welded at their respective ends to the plate 36, and a pivot shaft 42 extends between the plate and the brackets. As is best seen in FIG. 3, the plate 36 is secured to the pivot shaft 42 in such manner that it is both revolvable and translatable relative to the longitudinal axis 43 of the shaft. The range of revolutionary movement is limited by hydrodynamic forces, and the range of translational movement is limited by the brackets 40. The pivot shaft 42 extends transversely across the flow path 34 and is rigidly secured to the duct 32 so that it is prevented from rotating.

The actuator 38 comprises a housing 44 and a piston 46. The piston 46 has a head 48 slidably disposed within the housing 44 and an output shaft 50 that extends outwardly from the housing. A cylindrical sleeve 52 rotatable about a centrally-disposed, recessed portion of the pivot shaft 42 is welded to the output shaft 50, thus revolvably securing the actuator 38 to the pivot shaft. A biasing spring 54 surrounds the output shaft 50 where the latter extends into the housing 44, and tends to retain the plate 36 in the closed position indicated by FIGS. 2 and 3.

The pivot shaft 42 is formed from two axially-extending portions which are rigidly intersecured by any suitable means. This is done so that the cylindrical sleeve 52 can be secured to the pivot shaft 42 while providing minimal axially-directed play between the sleeve and the shaft. As one alternative, stops could be welded to a single-portion pivot shaft on either side of the cylindrical sleeve 52 once the latter is positioned on the shaft. The pivot shaft 42 has two pinion gears 56 which engage two rack gears 58 on the plate 36. These gears 56, 58 may be rigidly secured to the shaft 42 and plate 36, respectively, or may be integrally formed thereon. To minimize binding, the gears 56, 58 should be appropriately dimensioned so that the contact points therebetween are nominally flush with the surface 60 of the plate 36.

The pivot shaft 42 has a longitudinally-extending passage 62 and a connecting passage 64 providing fluid communication between an external source (not shown) of pressurized air and a pressure chamber 66 formed in the actuator 38. The piston 46 has an axially-extending passage 68 to accomodate the forementioned fluid communication. The cylindrical sleeve 52 has an inside, annular recess (not shown) to provide continuous communication between the connecting passage 64 and the passage 68 as the actuator 38 revolves relative to the pivot shaft 42.

In operation, the plate 36 is rotated away from the closed position by pressurizing the chamber 66. Pressurization of the chamber 66 causes the plate 36 to rotate in the direction indicated by the arrow 70. (note the moment arm defined between contact of the plate 36 and shaft 42, and the center of the chamber 66). Essentially, the plate 36 rolls around the fixed pivot shaft 42, and the rolling motion effects translation of the plate relative to its axis of revolution (the axis of revolution being the longitudinal axis 43 of the pivot shaft 42). The chamber 66 may be depressurized via a conventional external pressure regulator (not shown) that provides for two-way communication through the channels 62, 64, 66, or via bleed holes (not shown) provided in the housing 44 to permit flow from the chamber to the flow path 34.

The arrows 72 in FIG. 4 indicate the direction in which fluid (typically, air) flows through the duct 32. Since the plate 36 translates relative to its axis of revolution as it rolls around the pivot shaft 42, the area of the plate on one side (indicated in a single dimension by arrow 74) of the axis 43 is made greater than the area on the other side (indicated by arrow 76). This effectively moves the center of pressure 24 (FIG. 1) associated with the hydrodynamic forces acting on the plate 36 to a position more closely aligned with the axis 43.

FIGS. 5 and 6 illustrate a second embodiment of the invention. The actuator 38 is secured to the plate 36 and pivot shaft 42 as in the embodiment of FIGS. 2 and 3. The pivot shaft 42 extends into eccentric slots (as at 78) formed in duct bosses 80, 82. Bearings (not shown) are provided on each end of the shaft 42 where the latter extends into the slots 78. In the closed position of the valve 30 as indicated in FIG. 6, the pivot shaft 42 is centered relative to the flow path 34 and positioned at the top of the eccentric slots 78. To open the valve 30, the pivot shaft 42 is displaced downwardly (as viewed in FIG. 6) in the slots 78 by pressurizing the chamber 66. This translates the shaft 42 relative to the plate 36, and relative to the center of pressure 24 (FIG. 1) associated with the hydrodynamic forces acting thereon. Consequently, the plate 36 rotates to an open position as is generally indicated by FIG. 7. When the plate 36 is in an open position, it can be translated in either direction by suitably adjusting the pressure in the chamber 66. The friction between the pivot shaft 42 and plate 36 resists the translational movement of the plate 36, but is minimized since the pivot shaft 42 is free to rotate via the bearings. A very small clearance is provided between the brackets 40 and the shaft 42.

FIGS. 8 and 9 illustrate a third embodiment of the invention. The actuator 38 is revolvably secured to the pivot shaft 42 as in the above-described embodiments. The housing portion 44 of the actuator 38 has flanges 84 (FIG. 11). A generally U-shaped guide 86 is rigidly secured to the plate 36 and defines a slot 88 along which the flanges 84 are slidable in opposing directions which are parallel to the plate. The flanges 84 and guide 86 are dimensioned so that at least a longitudinally-extending portion of the former is always within the slot 88, thus securing the actuator 38 to the plate 36. The plate 36 has an opening 90 which cooperates with a slidable gate member 92 to form a pilot valve 94. Two spaced guides 96 (only one being shown in FIG. 9) rigidly secured to the plate 36 serve the purpose of guiding movement of the gate member 92 while retaining the latter to the plate. The gate member 92 has two bosses (as at 98), each having a hole 100. The gate member 92 is secured to one end of a mechanical linkage element 102 by pins (not shown) which extend through the holes 100 and the linkage element. Two bosses (as at 104) on the housing 44 have sockets (not shown) which receive two pintle portions (as at 106) of the linkage element 102, thus securing the latter to the housing 44. Bosses 108, 110 on the linkage element 102 and cylindrical sleeve 52, respectively, are provided with suitable means for attaching the ends of a compressed spring 112. Two extension springs 114, 116 are secured under tension between bosses (as at 118) which are welded to the plate 36 and recessed portions (as at 120) of the pivot shaft 42, as indicated in FIG. 8. Two stops (as at 122) are welded to the plate 36 and define a reference position of the plate relative to the pivot shaft 42 when the valve 30 is closed. The compressed spring 112, acting through the linkage element 102, biases the pilot valve 94 shut. The two springs 114, 116 bias the plate 36 toward the forementioned reference position.

In operation, the valve 30 is opened by pressurizing the chamber 66. When the chamber 66 is sufficiently pressurized to overcome the force exerted by the compressed spring 112, the housing 44 moves toward an abutment 124 defined by the U-shaped guide 86. In moving toward the abutment 124, the housing 44 cooperates with the linkage element 102 to lift the gate member 92, thus opening the pilot valve 94. Opening the pilot valve 94 reduces the area of the plate 36 on one side of the pivot shaft 42, thus relocating the center of pressure 24 (FIG. 1) above the longitudinal axis 43 of the shaft 42. The plate 36 thereby moves to an open position as indicated in FIG. 10. Further pressurization of the chamber 66 presses the housing 44 against the abutment 124 and effects translational movement of the plate 36 relative to the axis 43. When the chamber 66 is depressurized, the extension springs 114, 116 act to move the plate 36 in the opposite direction until limited by the stops 122, and the compressed spring 112 acts to close the pilot valve 94 while the housing 44 is returned to a null position.

In the above-described embodiments of the invention, it is assumed that translational movement of the plate 36 relative to its axis of revolution is to be preferred over the conventional arrangement illustrated in FIG. 1. Advantages associated with such movement have been described above. However, there are unique advantages associated with mounting the actuator 38 on the plate 36, irrespective of the manner in which the plate is rotated or stabilized. First, an actuator so mounted provides a ready, local means for opening a pilot valve and for selectively adjusting flow through the pilot valve. Second, an actuator so mounted obstructs flow to a lesser degree than does an actuator mounted to the duct. Third, an actuator so mounted, and substantially centered relative to that portion of the pivot shaft 42 which is defined by the duct, should render the butterfly valve less sensitive to vibration than arrangements in which the actuator is externally mounted. Fourth, an actuator so mounted provides many possible arrangements for opening and adjusting the butterfly valve, only a few of which are disclosed herein.

FIGS. 12 and 13 illustrate additional embodiments of the invention. In FIG. 12, the pivot shaft 42 extends through the plate 36 in the conventional manner and is rotatably secured to the duct 32. The output shaft 50 of the actuator 38 is rigidly secured to a gate member 92 which cooperates with a hole 90 to form a pilot valve 94. Air is supplied to the pressure chamber (not shown) via a conduit 126 which extends through the duct 32. The valve 30 is opened to varying degrees depending on the degree to which the hole 90 is uncovered by the gate member 92.

In FIG. 13, a stepped duct 32 is employed so that initial opening can be effected by translation of the plate 36 relative to the shaft 42. The plate 36 has an annular portion 128 which is non-parallel to the remainder for reasons set forth below. The actuator 38 is a bi-directional motor having a jackscrew-type output shaft 132, which is movable relative to the housing 44, the housing being centered in the flow path 34. The actuator 38 and pivot shaft 42 are intersecured by a suitable connecting member 134 and cylindrical sleeve 52 (FIG. 2) so that the actuator is revolvable about the shaft. As in the embodiment of FIG. 2, the pivot shaft 42 is rigidly secured to the duct 32, and rack and pinion gears 58,56 (FIG. 2) are provided on the plate 36 and pivot shaft, respectively. However, bearings (not shown) are provided between the pinion gears 56 and pivot shaft 42 so that the pinion gears are easily rotated around the shaft. The ends of the output shafts 132 abut lugs (as at 136) that are welded to the plate 36. The lugs 136 have abutment surfaces (as at 138), and surfaces (as at 140) which are suitably threaded for engagement with the output shaft 132. Electrical communication to the actuator 38 is provided through channels (not shown) formed in the pivot shaft 42 and connecting member 134. The plate 36 is thus translatable in either direction transverse to the pivot shaft 42 in response to signals communicated to the actuator 38.

Testing has shown that for those embodiments in which the plate 36 is revolvable and translatable relative to the pivot shaft 42, stability problems may be encountered as a result of hydrodynamic forces which act in a direction parallel to the plate. Stability is considerably improved if the plate 36 is configured so that these forces (represented in sum by arrow 142) tend to close the butterfly valve 30. In the embodiment of FIG. 13, this is accomplished by providing the annular portion 128.

The word "actuator" as used herein is intended to mean any device which can be used or adapted for use with this invention and which produces a mechanical response to a hydraulic, pneumatic, or electronic input to the device delivered from an external source. Examples of actuators meeting this definition are electronically-actuated stepping motors, hydraulically or pneumatically actuated motors, and solenoids.

The term "fully open" as used in reference to the valve 30 or to the position of the plate 36 is intended to mean that position of the plate which in any particular design provides for maximum flow through the valve. Depending on the design, that position may or may not be such that the plate is parallel to the flow path 34.

## Claims

1. Butterfly valve apparatus comprising a duct (32) defining a flow path (34) for fluid, a plate-like valve member (36) disposed in the flow path, a shaft (42) extending across the flow path and supporting the valve member therein, the shaft being supported by the duct and the valve member being supported so as to be rotatable between a position associated with minimum fluid communication through the flow path and a position associated with maximum fluid communication through the flow path, and an actuator (38) disposed in the flow path for moving the valve member between the positions;
characterized in that the actuator (38) is spaced from the duct (32) and secured to the plate-like valve member (36) so that the actuator is carried with the valve member when the latter moves, the actuator being secured to the valve member so as to be operable to variably open the valve via rotational movement of the valve member between the positions.

2. The butterfly valve according to Claim 1 further characterized in that the actuator comprises a housing (44) connected to the valve member and an output shaft (50) extending outwardly from the housing, the output shaft being secured to the shaft (42) so as to be revolvable relative thereto.

3. The butterfly valve according to Claim 2 wherein the actuator is a hydraulically or pneumatically driven motor.

4. The butterfly valve according to Claim 2 wherein the actuator is an electrical motor.

5. The butterfly valve according to Claim 1 wherein the valve member is secured to the shaft so as to be capable of translational movement relative thereto in directions which are parallel to the valve member, the apparatus being adapted via the translational movement capability to minimize torque exerted on the valve member by fluid in the flow path.

6. The butterfly valve according to Claim 5 wherein the actuator is a pneumatically or hydraulically driven motor.

7. The butterfly valve according to Claim 1 wherein the valve member, the shaft, and the actuator are intersecured such that the actuator is operable to effect translational movement of the valve member in directions parallel thereto, thereby being operable to effect a change in torque exerted on the valve member by fluid in the flow path so that rotational movement of the valve member occurs in response to the change in torque.

8. The butterfly valve according to Claim 1 wherein the actuator is a pneumatically-driven motor.

9. The butterfly valve according to Claim 1 wherein the actuator is an electrical motor.

10. The butterfly valve according to Claim 1 wherein the actuator is a hydraulically-driven motor.

## Patentansprüche

1. Drehklappenventilvorrichtung mit einer einen Strömungsweg (34) für ein Fluid bildenden Leitung (32), einem in dem Strömungsweg angeordneten plattenartigen Ventilelement (36), einer sich quer über den Strömungsweg erstreckenden und das Ventilelement darin tragenden Welle (42), wobei die Welle von der Leitung und das Ventilelement derart getragen wird, daß es zwischen einer einer minimalen Fluidverbindung über den Strömungsweg und einer einer maximalen Fluidverbindung über den Strömungsweg zugeordneten Lage drehbar ist, und mit einem im Strömungsweg angeordneten Aktuator (38) zum Bewegen des Ventilelementes zwischen den Lagen;
dadurch gekennzeichnet, daß der Aktuator (38) in einem Abstande von der Leitung (32) angeordnet und am plattenartigen Ventilelement (36) befestigt ist, so daß der Aktuator mit dem Ventilelement mitgetragen wird, wenn sich das letztere bewegt, wobei der Aktuator am Ventilelement derart befestigt ist, daß er zum veränderlichen Öffnen des Ventiles über eine Drehbewegung des Ventilelementes zwischen den Lagen betreibbar ist.

2. Drehklappenventil nach Anspruch 1, das ferner dadurch gekennzeichnet ist, daß der Aktuator ein mit dem Ventilelement verbundenes Gehäuse (44) und eine sich aus dem Gehäuse heraus erstreckende Ausgangswelle (50) aufweist, wobei die Ausgangswelle an der Welle (42) derart befestigt ist, daß sie relativ dazu drehbar ist.

3. Drehklappenventil nach Anspruch 2, bei dem der Aktuator ein hydraulisch oder pneumatisch getriebener Motor ist.

4. Drehklappenventil nach Anspruch 2, bei dem der Aktuator ein elektrischer Motor ist.

5. Drehklappenventil nach Anspruch 1, bei dem das Ventilelement an der Welle derart befestigt ist, daß es zu einer Schiebebewegung relativ dazu in zum Ventilelement parallelen Richtungen fähig ist, wobei die Vorrichtung durch die Fähigkeit zu einer Schiebebewegung zu einer Minimierung des durch das Fluid im Strömungsweg auf das Ventilelement ausgeübten Drehmomentes ausgebildet ist.

6. Drehklappenventil nach Anspruch 5, bei dem der Aktuator ein hydraulisch oder pneumatisch getriebener Motor ist.

7. Drehklappenventil nach Anspruch 1, bei dem das Ventilelement, die Welle und der Aktuator untereinander derart gesichert sind, daß der Aktuator zur Erzielung einer Schiebebewegung des Ventilelementes in dazu parallelen Richtungen betreibbar und dabei zur Erzielung einer Veränderung des durch das Fluid im Strömungsweg auf das Ventilelement ausgeübten Drehmomentes derart betreibbar ist, daß eine Drehbewegung des Ventilelementes mit einer Veränderung des Drehmomentes einhergeht.

8. Drehklappenventil nach Anspruch 1, bei dem der Aktuator ein pneumatisch getriebener Motor ist.

9. Drehklappenventil nach Anspruch 1, bei dem der Aktuator ein elektrischer Motor ist.

10. Drehklappenventil nach Anspruch 1, bei dem der Aktuator ein hydraulisch getriebener Motor ist.

## Revendications

1. Dispositif à robinet papillon comprenant un conduit (32) définissant un trajet d'écoulement (34) pour un fluide, un élément de robinet en forme de plaque (36) disposé dans le trajet d'écoulement, un arbre (42) disposé transversalement par rapport au trajet d'écoulement et servant de support dans celui-ci à l'élément de robinet, l'arbre prenant appui sur le conduit et l'élément de robinet prenant appui de façon à être mis en rotation entre une position associée à un écoulement minimal du fluide dans le trajet d'écoulement et une position associée à un écoulement maximal du fluide dans le trajet d'écoulement, et un vérin (38) disposé dans le trajet d'écoulement pour déplacer l'élément de robinet entre ces positions;
caractérisé en ce que le vérin (38) est espacé de la canalisation (32) et fixé à l'élément de robinet en forme de plaque (36) de façon à ce que le vérin soit porté par l'élément de robinet lorsque ce dernier se déplace, le vérin étant fixé à l'élément de robinet pour pouvoir être actionné afin de produire une ouverture variable du robinet du fait du mouvement de rotation de l'élément de robinet entre ces positions.

2. Robinet papillon selon la revendication 1, caractérisé en outre en ce que le vérin comprend un boitier (44) relié à l'élément de robinet et un arbre d'actionnement (50) s'étendant vers le bas du boitier, l'arbre d'actionnement étant fixé à l'arbre (42) de façon à pouvoir être mis en rotation par rapport à celui-ci.

3. Robinet papillon selon la revendication 2, dans lequel le vérin est un moteur entrainé hydrauliquement ou pneumatiquement.

4. Robinet papillon selon la revendication 2, dans lequel le vérin est un moteur électrique.

5. Robinet papillon selon la revendication 1, dans lequel l'élément de robinet est fixé à l'arbre de façon à pouvoir effectuer un mouvement de translation par rapport à celui-ci dans des directions qui sont parallèles à l'élément de robinet, le dispositif étant adapté, du fait de son aptitude à effectuer un mouvement de translation, à minimiser le couple exercé sur l'élément de robinet par le fluide dans le trajet d'écoulement.

6. Robinet papillon selon la revendication 5, dans lequel le vérin est un moteur entrainé pneumatiquement ou hydrauliquement.

7. Robinet papillon selon la revendication 1, dans lequel l'élément de robinet, l'arbre et le vérin sont fixés les uns aux autres de telle façon que le vérin puisse être actionné pour produire un mouvement de translation de l'élément de robinet dans des directions parallèles à celui-ci et puisse ainsi être actionné pour produire une modification du couple exercé sur l'élément de robinet par le fluide dans le trajet d'écoulement, de façon à ce que le mouvement de rotation de l'élément de robinet se produise en réponse à la variation de couple.

8. Robinet papillon selon la revendication 1, dans lequel le vérin est un moteur entrainé pneumatiquement.

9. Robinet papillon selon la revendication 1, dans lequel le vérin est un moteur électrique.

10. Robinet papillon selon la revendication 1, dans lequel le vérin est un moteur entrainé hydrauliquement.
